# EUROPEAN PATENT APPLICATION

(11) **EP 0 979 767 A1**
(43) Date of publication of application: **16.02.2000**
(21) Application number: 98306949.3
(22) Date of filing: 28.08.1998
(51) Int. Cl.: B62B 11/00, F16C 33/20, F16C 35/02

(54) **A baby rider**

(30) Priority: 11.08.1998 GB 9817460
(71) Applicant: Trystart Industrial Limited, Kwai Chung, New Territories, Hong Kong (HK)
(72) Inventor: Chow, Man Nelson, Kwai Chung, New Territories, Hong Kong (HK)
(74) Representative: Pratt, David Martin

(57) **Abstract**

The present invention provides a baby rider of simple construction wherein all the components can be dis-assembled and stored within the main ride-on body when packaged, and furthermore, all components can be easily re-assembled by the consumer once the baby rider has been purchased, the baby rider comprises a main body (1), a front wheel assembly (5a) and a rear wheel assembly (5b), wherein both the front wheel assembly (5a) and rear wheel assembly (5b) are detachably mountable on the main body (1), and are sized and shaped so as to be packagable within the main body (1), whereby the front and rear wheel assemblies (5a, 5b) can be packaged within the main body (1) for subsequent removal from, and assembly to, the main body (1).

## Description

The present invention relates to a baby rider, and more specifically to a baby rider that can be dis-assembled and re-assembled with a rear wheel assembly separate from the main body of the car.

Baby riders currently available come in all shapes and sizes. A baby rider is generally on sale in packaging taking the form of a cardboard box, in which the rider itself is dis-assembled and packed in such a way as to keep the size of the packaging to a minimum to make it easier for the consumer to carry, once the baby rider has been purchased. This involves placing all the various components, including a seat, a steering wheel, a steering shaft, a push bar, and front and rear wheels within an up-turned main body of the baby rider. The purchaser must then take the components out of the packaging, and re-assemble the rider before it can be used by a child.

Owing to the fact that the baby rider must be assembled before use, the rider is usually made up of simple components, and there must be a simple method of construction. As stated previously, the main components that make up the baby rider are a ride-on main body, a steering wheel, a steering shaft, a seat, a push bar, and front and rear wheels. All these components, other than the rear wheels, can be made of simple construction, and can be assembled and dis-assembled from each other with relative ease by the purchaser of the baby rider.

All present manufacturers of baby riders have found a problem with producing a rear wheel mechanism of simple construction such that the consumer can assemble and dis-assemble the rear wheels easily. For this reason, baby riders currently on the market are sold dis-assembled in their packaging, but with the rear wheels remaining connected to the main ride-on body. As a result of the rear wheel remaining connected in the packaging, the minimum size of the packaging itself is limited. As the packaging size is directly related to freight costs, the technical problem of not producing a simple rear wheel construction mechanism directly affects the profits of the manufacturer of the baby rider. From recent tests, it has been shown that, by producing a baby rider whose rear wheel mechanism is also dis-assembled and placed within the main ride-on body when the baby rider is in its packaging, the size of the packaging can be greatly reduced to an extent that freight costs of the packaging can be reduced by as much as 25 to 30 per cent. However, it is not just a question of providing the rear wheels dis-assembled from the main body, but of also providing a rear wheel mechanism that is simple and is easily re-assembled with the main body. At present, baby rider manufacturers have failed to produce a system that overcomes both of these problems.

The present invention overcomes the problems mentioned above by providing a baby rider of simple construction wherein all the components, including the rear wheels, can be dis-assembled and stored within the main ride-on body when packaged, and furthermore, all components can be easily re-assembled by the consumer once the baby rider has been purchased.

Accordingly, the present invention provides a baby rider comprising a main body, a front wheel assembly and a rear wheel assembly, wherein both the front wheel assembly and rear wheel assembly are detachably mountable on the main body, and are sized and shaped so as to be packagable within the main body, whereby the front and rear wheel assemblies can be packaged within the main body for subsequent removal from, and assembly to, the main body.

An embodiment of the present invention will now be described with reference to the accompanying drawings wherein:
Figure 1 is a side view of a baby rider constructed in accordance with the present invention,
Figure 2 is a perspective view of the rear wheel assembly of the baby rider of Figure,
Figure 3 is a perspective view of a portion of the back panel of the main body of the baby rider to which the rear wheels are fitted,
Figure 4 illustrates the first step of attachment of the rear wheels of Figure 2 with the back panel portion of Figure 3,
Figure 5 illustrates the second step of attachment of the rear wheels of Figure 2 with the back panel portion of Figure 3,
Figure 6 illustrates the third step of attachment of the rear wheels of Figure 2 with the back panel portion of Figure 3,
Figure 7 illustrates the fourth step of attachment of the rear wheels of Figure 2 with the back panel portion of Figure 3, and
Figure 8 is a side view of the dis-assembled baby rider of Figure 1 illustrating how the baby rider is placed within its packaging.

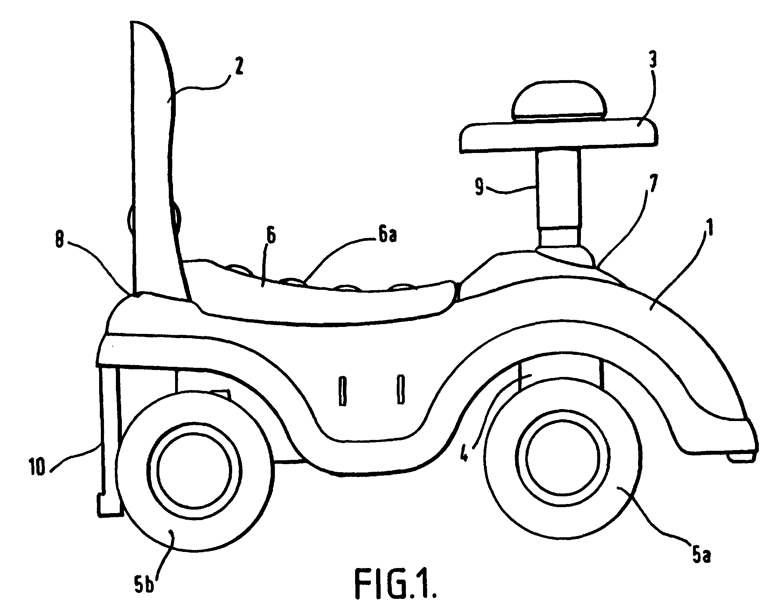

Referring to the drawings, Figure 1 shows a baby rider which comprises a main body 1, a push bar 2, a steering wheel 3, a steering shaft 4, two front wheels 5a (only one of which is shown in Figure 1) and two rear wheels 5b (again, only one of which is shown in Figure 1). The main body 1 is made from a smooth plastics material, or from any other suitable lightweight material. The material of the main body 1 must be strong enough to withstand a weight of at least 50 kilograms placed upon it. The main body 1 is shaped in the form of a car shell, having a reasonably streamlined structure. The main body 1 has a seat 6 formed integral with its top surface at one end. The seat is also made of suitable, smooth lightweight plastics material and has an plurality of smooth ridges 6a formed across its width in order to provide extra grip to a child, when the child sits on the seat with his/her legs hanging down either side of the main body 1. The main body 1 has a two large apertures 7 and 8, one at either end of the main body in order to receive sections of a steering column 9 and the push bar 2 respectively. The first aperture 7, at the front of the main body 1, is situated on a mound that is formed on the main body at that location. The steering wheel 3 is attached to the end of the steering column 9 above the main body 1. The rest of the steering column 9 protrudes thought the first aperture 7. The steering shaft 4 is provided at the other end the steering column 9. The front wheels 5a are situated at either end of the steering shaft 9. In use, the front wheels 5a can be turned left or right using the steering wheel 3, by a child sitting on the seat 6 of the main body 1.

The push bar 2 stands perpendicular to the plane of the main body 1. A section of the push bar 2 protrudes through the second aperture 8 at the back of the main body 1 in order to keep the push bar 2 in position. Preferably, the height at which the push bar 2 stands from the surface of the main body 1 is greater than the average sitting height of a child for which the baby rider is suitable. Therefore, the push bar 2 is also able to act as a back stop, to prevent the child from falling backwards during use.

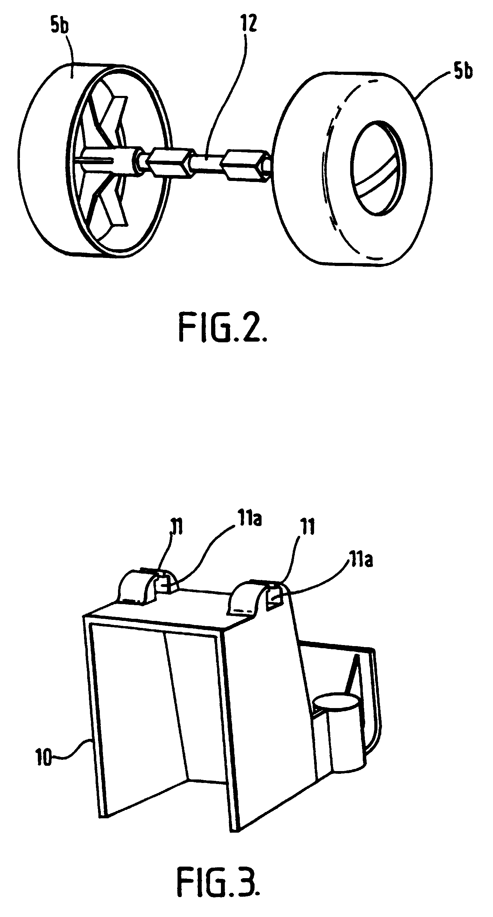

A back panel 10 is formed integrally with the main body 1, and extends downwards from the underside of the back of the main body. A section of this back panel 10 can be seen more clearly in Figure 3. The back panel 10 has, on its underside, two clips 11 that are able to receive a rear axle 12. The rear axle 12 has, at each of its ends, a respective rear wheel 5b. Although the rear axle 12 is cylindrical in shape, each clip 11 is formed with an aperture 11a shaped such as to receive a respective elongate cuboid member 13 that is shaped to engage around the entire circumference of the rear axle. The cuboid members 13 can, then, slide along the rear axle 12. The rear wheel assembly can be seen more clearly in Figure 2.

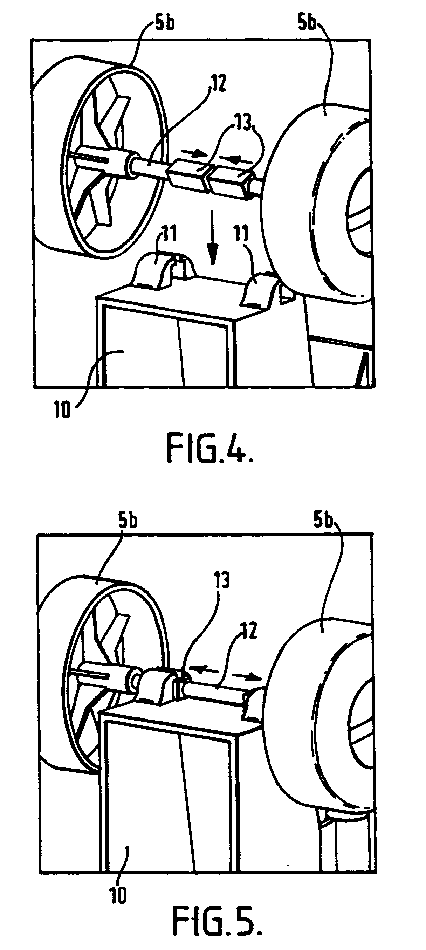

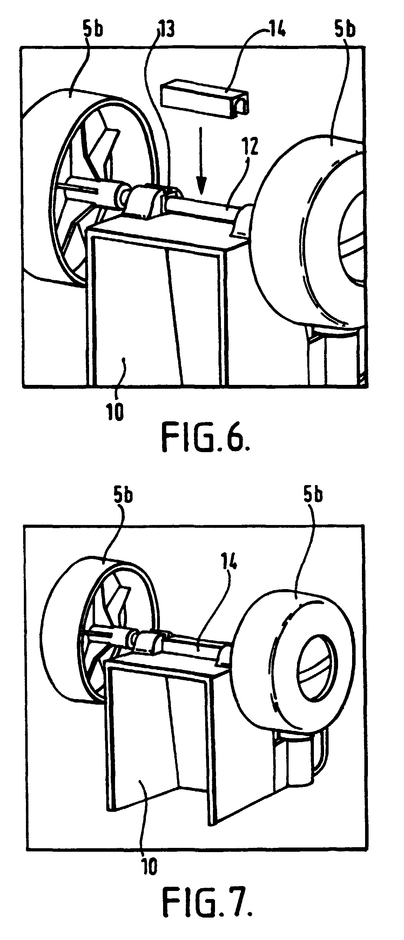

The method of assembly of the rear wheels 5b to the main body 1 will now be described in detail with reference to Figures 4 to 7. As can be seen in Figure 4, the elongate cuboid members 13 are firstly positioned near to the middle of the rear axle 12, so as not to obstruct the rear axle from being engaged by the clips 11. The rear axle 12 is snapped into engagement with the clips 11, after which the elongate cuboid members 13 are pushed along the rear axle away from the middle thereof such that they engage with the apertures of the clips 11 (see Figure 5). Finally, a third elongate cuboid member 14, having an inner channel shaped to mate with the rear axle 12, is placed between the first and second elongate cuboid members 13. Once the member 14 is in position, the rear axle 12 and, as a result, the rear wheels 5b, are locked in position ready for use.

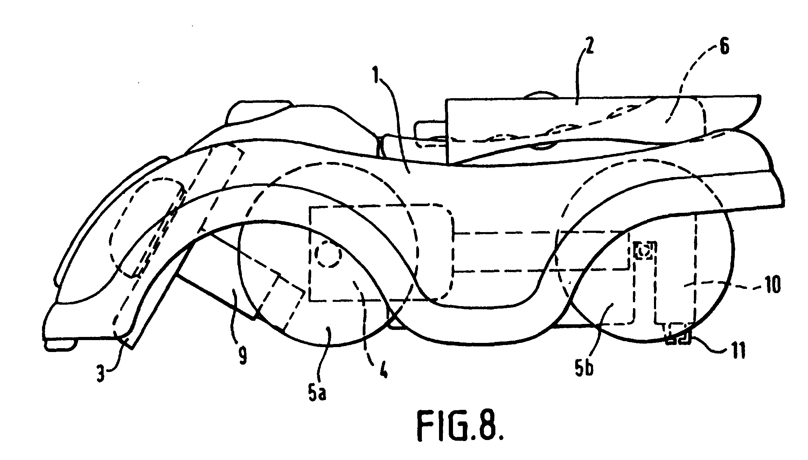

Figure 8 illustrates how the baby rider can be dismantled and placed in its packaging. Firstly, the rear wheels 5b are dis-assembled by carrying out the process described above in reverse. That is to say, the third elongate member 14 is detached from the rear axle 12, and the first and second elongate members 13 are moved towards the centre of the rear axle such that the axle 12 can be unclipped from the clips 11.

Secondly, the push bar 2 is detached from the main body 1, by pulling the stem section of the push bar 2 back through the second aperture 8 at the back of the main body.

Finally, the front wheel mechanism is detached from the main body 1, by detaching the steering wheel 3 from the top of the steering column 9, and by pulling the front wheels 5a, and front steering shaft 4 downwards, such that the entire steering column is pulled through the first aperture 7 at the front of the main body, and away from the main body.

Once all the components are dis-assembled from the main body 1, the main body can be turned upside down and all the components, including the now dis-assembled rear wheel assembly can be arranged within its shell-like structure, in such a way as to keep the size of the packaging needed to hold the entire baby rider, to a minimum.

## Claims

1. A baby rider comprising a main body, a front wheel assembly and a rear wheel assembly, wherein both the front wheel assembly and rear wheel assembly are detachably mountable on the main body, and are sized and shaped so as to be packagable within the main body, whereby the front and rear wheel assemblies can be packaged within the main body for subsequent removal from, and assembly to, the main body.

2. A baby rider according to claim 1, wherein the rear wheel assembly comprises two rear wheels, situated one at each end of a rear axle.

3. A baby rider according to claim 1 or claim 2, wherein the main body further comprises a back panel, the back panel having at least one clip on its underside for engagement with the rear axle.

4. A baby rider according to claim 3, wherein the rear axle has a respective locking member for the or each clip, the or each locking member being position able so as to lock the rear axle into a position where it is attached to the back panel of the main body.

5. A baby rider according to claim 4, wherein the or each locking member is shaped to engage round the rear axle.

6. A baby rider according to any one of claims 3 to 5, wherein the or each clip is formed with an aperture, the or each aperture being shaped to engage with the associated locking member.

7. A baby rider according to claim 6, further comprising a positioning member having an inner channel shaped to mate with the rear axle, and wherein the positioning member is placed, in use, on the rear axle so as to keep the or each locking member in engagement with the aperture of the associated clip.

8. A baby rider according to claim 7, having two clips situated one at each end of the back panel, and having two locking members each being movable between a first unlocking position towards the middle of the rear axle and a second locking position in engagement with the aperture of the respective clip, and wherein the positioning member is position able between the locking members when the locking members are in the locking position, so as to prevent the locking members from moving to their respective unlocking positions.

9. A baby rider according to any preceding claim, wherein the front wheel assembly comprises a steering wheel, a steering shaft and at least one front wheel.

10. A baby rider according to claim 9, wherein the steering wheel is detachably attached one end of the steering column.

11. A baby rider according to claim 10, wherein the main body has an aperture through which to receive the steering column.

12. A baby rider according to claim 11, further comprising a push bar detachably attached to the main body.

13. A baby rider according to claim 12, wherein the main body consists of a hollow shell structure.

14. A baby rider according to claim 13, wherein the front wheel assembly, the rear wheel assembly and the push bar can each be dis-assembled from the main body and stored within the main body when the main body is upturned.
